# FASCICULE DE BREVET EUROPEEN

(11) **EP 2 568 916 B1**
(45) Date de publication et mention de la délivrance du brevet: **20.07.2016**
(21) Numéro de dépôt: 11720746.4
(22) Date de dépôt: 10.05.2011
(51) Int. Cl.: A61C 1/06, A61C 1/18, A61C 1/08

(54) **DISPOSITIF D'ACCOUPLEMENT ENTRE UN MOTEUR ET UNE PIECE A MAIN A USAGE DENTAIRE OU CHIRURGICAL**
KOPPLUNGSVORRICHTUNG ZWISCHEN EINEM MOTOR UND EINEM HANDSTÜCK ZUR DENTALEN ODER CHIRURGISCHEN VERWENDUNG
COUPLING DEVICE BETWEEN A MOTOR AND A HANDPIECE FOR DENTAL OR SURGICAL USE

(30) Priorité: 12.05.2010 EP 10162732
(43) Date de publication de la demande: 20.03.2013
(73) Titulaire: Bien-Air Holding SA, 2500 Bienne 6 (CH)
(72) Inventeur: SCHÖNBÄCHLER, Edgar, CH-2000 Neuchâtel (CH); SIEGENTHALER, Didier, CH-2087 Cornaux (CH)
(74) Mandataire: Giraud, Eric
(86) Numéro de dépôt international: PCT/EP2011/057460
(87) Numéro de publication internationale: WO 2011/141441

(56) Documents cités:
- EP-A1- 2 073 359
- EP-A2- 0 905 432
- WO-A2-2010/106157

## Description

La présente invention concerne un dispositif d'accouplement entre un moteur et une pièce à main à usage dentaire ou chirurgical. Plus précisément, la présente invention concerne un tel dispositif d'accouplement présentant une ergonomie optimisée.

Le cabinet des dentistes a considérablement évolué au cours de ces dernières années. Soucieux de proposer à leur clientèle un service complet dans un cadre sécurisant et moderne, les praticiens investissent dans des équipements de plus en plus sophistiqués. Face à des interventions de plus en plus diverses (restauration, endodontie, prophylaxie, orthodontie, implantologie etc.), l'instrumentation du praticien a considérablement augmenté en nombre. Or, l'espace de travail du praticien est nécessairement limité. Tous les instruments nécessaires à l'intervention doivent être regroupés autour du patient assis sur le fauteuil et doivent rester à portée de main du praticien. Les instruments doivent pouvoir être changés rapidement au cours d'une intervention et entre deux patients successifs. De plus, les instruments doivent pouvoir être commandés de manière simple et dans des conditions d'hygiène irréprochables afin d'éviter les risques d'erreur de manipulation et de contamination.

On observe également actuellement la création de plus en plus de cliniques dentaires dans lesquelles plusieurs praticiens se partagent les installations afin d'offrir un service complet. Il apparaît ainsi un besoin sans cesse croissant en outils de travail polyvalents qui puissent être utilisés de façon extrêmement flexible par des personnes différentes.

Avec l'électrification des unités d'alimentation et de commande couramment désignées par le terme "unit", le moteur électrique couplé avec une pièce à main offre une plage de vitesses étendue avec une puissance élevée et a en grande partie supplanté les instruments fonctionnant à l'air comprimé. Le plus souvent, le moteur électrique est installé sur l'unit de manière semi-permanente et possède à son avant une interface mécanique permettant le montage et l'échange rapide des pièces à main.

Depuis de nombreuses années et pour l'immense majorité des produits du marché, le dispositif d'accouplement entre un moteur électrique et une pièce à main répond aux critères de la norme ISO 3964-1982. Cette norme, entrée en vigueur en 1982, régit les dimensions mécaniques de l'accouplement et son application par la plupart des fabricants permet aux praticiens d'utiliser indifféremment des produits de différentes marques sans se soucier de la compatibilité entre les moteurs et les pièces à main.

Le dispositif d'accouplement entre un moteur électrique et une pièce à main assure également le passage de fluides, notamment de l'air et de l'eau, dans des canaux séparés pour la création d'un spray dans la zone de travail de l'outil. Des dispositifs d'accouplement qui permettent le passage de l'air et de l'eau sont décrits dans les brevets CH 621057 et CH 580420 déposés dans les années 1970. Commercialisés sous les marques déposées Intramatic® et Intramatic® Lux, ces dispositifs d'accouplement se sont rapidement imposés sur le marché et constituent aujourd'hui encore une sorte de standard.

Enfin, la lumière, classiquement produite par une ampoule située dans le moteur et destinée à éclairer la zone de travail, est acheminée par une fibre optique disposée à l'intérieur de la pièce à main. La lumière passe du moteur à la pièce à main au niveau du dispositif d'accouplement décrit ci-dessus.

Il apparaît actuellement que les interfaces du genre décrit ci-dessus ne répondent plus à l'évolution des besoins, notamment en termes d'ergonomie, de maniabilité, de légèreté et de performances. En particulier, la féminisation de la profession fait apparaître un besoin pour des instruments plus courts s'adaptant mieux à des mains généralement plus petites.

La présente invention a pour but de répondre à ce besoin ainsi qu'à d'autres encore en procurant un ensemble formé par un moteur et une pièce à main selon la revendication 1 présentant notamment une ergonomie optimisée.

Une forme préférentielle de l'invention est définie par la revendication 2. A cet effet, on décrit un moteur électrique comprenant un nez pour l'accouplement avec une pièce à main chirurgicale ou dentaire, le rapport entre la longueur du nez et le diamètre extérieur du nez fixé par la norme ISO 3964-1982 étant compris entre 1,8 et 2,5.

On décrit un moteur électrique pour pièce à main dentaire ou chirurgicale dont la longueur du nez est comprise dans une fourchette variant entre 17 et 25 mm. Cette plage de valeur est à comparer à la longueur du nez de 31,8 mm telle qu'elle découle de la norme ISO 3964-1982.

Une réduction sensible de la longueur du nez d'un moteur électrique pour pièce à main chirurgicale ou dentaire ne nuisait pas à la tenue mécanique de l'accouplement entre le moteur et la pièce à main. Au contraire, il a été observé qu'en dépit de la réduction de la longueur du nez du moteur, il est possible de garantir les mêmes performances en termes de tenue mécanique, d'embrayage, de guidage et de transmission de puissance mécanique. Il est proposé de modifier la valeur d'un paramètre, en l'occurrence la longueur du nez d'un moteur électrique, que l'ensemble des fabricants a respectée pendant 30 ans, c'est-à-dire depuis la publication de la norme ISO 3964-1982 en 1982.

Selon un autre avantage de l'invention, la réduction de la longueur du nez du moteur électrique n'affecte pas la partie arrière de l'accouplement, de sorte que les moyens de blocage axial entre le moteur électrique et la pièce à main ainsi que la géométrie du passage des fluides air/eau et du flux lumineux demeurent inchangés. Il est ainsi possible de garantir la compatibilité entre les moteurs à nez raccourci selon l'invention et les pièces à main existantes du marché initialement destinées à s'adapter sur un moteur conforme à la norme ISO 3964-1982.

Selon encore un autre avantage de l'invention, la réduction de la longueur du nez du moteur électrique par rapport à ce qui est préconisé par la norme ISO 3964-1982 n'affecte pas le mécanisme d'embrayage entre le moteur électrique et la pièce à main. L'accouplement conforme à la norme ISO 3964-1982 permet en effet de connecter la pièce à main sur le nez du moteur et de bloquer axialement la pièce à main sur le nez du moteur quelle que soit la position angulaire des deux pièces d'accouplement appelées entraîneur et entraîné et situées respectivement dans le moteur et dans la pièce à main. Si les deux pièces d'accouplement, à savoir l'entraîneur et l'entraîné, se trouvent dans une position angulaire relative qui ne leur permet pas d'embrayer, l'entraîné, monté sur ressort, absorbe le mouvement axial de l'entraîneur du moteur lors de la connexion. Par suite, l'embrayage s'opère immédiatement et automatiquement et l'entraîné retrouve sa position axiale d'origine. On notera d'autre part que, de par sa construction, le mécanisme décrit ci-avant permet également de compenser les erreurs d'alignement axial entre le moteur et la pièce à main.

En réduisant la longueur du nez d'accouplement du moteur électrique, il est ainsi possible de réduire dans les mêmes proportions la longueur de la pièce à main, ce qui permet de réduire la longueur totale de l'ensemble moteur/pièce à main. L'ensemble moteur/pièce à main est ainsi plus léger et permet une meilleure prise en main.

Selon une caractéristique complémentaire de l'invention, la longueur de la partie femelle arrière est au minimum de 17 mm aux tolérances près.

D'autres caractéristiques et avantages de la présente invention ressortiront plus clairement de la description détaillée qui suit d'un mode de réalisation du dispositif d'accouplement selon l'invention, cet exemple étant donné à titre purement illustratif et non limitatif seulement en liaison avec le dessin annexé sur lequel:
- la figure 1 est une vue partielle en coupe du nez d'accouplement d'un moteur électrique pour pièce à main dentaire ou chirurgicale obéissant à la norme ISO 3964-1982;
- la figure 2 est une vue en coupe de la partie femelle d'accouplement d'une pièce à main à usage chirurgical ou dentaire obéissant à la norme ISO 3964-1982;
- la figure 3 est une vue de profil d'un moteur électrique pour pièce à main chirurgicale ou dentaire selon l'invention;
- la figure 4A est une vue de profil avec arrachement de matière de la zone d'accouplement entre une pièce à main et un moteur électrique conformes à la norme ISO 3964-1982;
- la figure 4B est une vue de profil avec arrachement de matière de la zone d'accouplement entre une pièce à main et un moteur électrique raccourcis conformément à la présente invention;
- la figure 5A est une vue de profil d'un ensemble formé par un moteur électrique et une pièce à main obéissant à la norme ISO 3964-1982, et
- la figure 5B est une vue de profil d'un ensemble formé par un moteur électrique et une pièce à main selon l'invention.

La présente invention décrit la réduction de la longueur du nez d'accouplement d'un moteur électrique pour pièce à main chirurgicale ou dentaire d'une valeur de 31,8 mm prévue par la norme internationale ISO 3964-1982 à une valeur comprise entre 17 et 25 mm. Ce faisant, on modifie la valeur d'un paramètre qui a été respectée par l'ensemble des fabricants pendant 30 ans, c'est-à-dire depuis la publication de la norme ISO 3964-1982 en 1982. On démontre qu'en dépit d'une réduction sensible de la longueur du nez d'accouplement du moteur, il est possible de garantir les mêmes performances en termes de tenue mécanique, d'embrayage, de guidage et de transmission de puissance mécanique qu'avec le nez d'accouplement d'un moteur électrique obéissant aux critères de la norme ISO 3964-1982. Enfin, la réduction de la longueur du nez du moteur n'affecte pas les moyens de blocage axial entre le moteur électrique et la pièce à main ainsi que la géométrie du passage des fluides air/eau et du flux lumineux. Il est ainsi possible de garantir la compatibilité entre les moteurs à nez raccourci et les pièces à main existantes du marché initialement destinées à s'adapter sur un moteur conforme à la norme ISO 3964-1982.

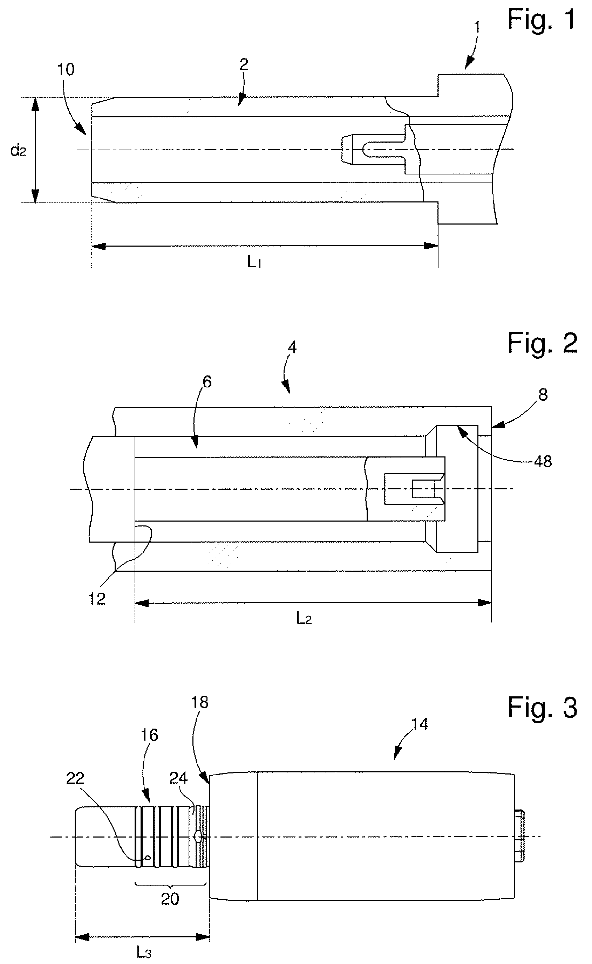

La figure 1 est une vue partielle en coupe d'un moteur électrique pour pièce à main dentaire ou chirurgicale obéissant à la norme ISO 3964-1982. Désigné dans son ensemble par la référence numérique générale 1, un tel moteur électrique comprend un nez d'accouplement 2 dont le diamètre extérieur d₂ a une cote nominale de 9.86 mm et dont la longueur hors-tout L₁ est de 31,8 mm.

La figure 2 est une vue en coupe de la partie femelle d'accouplement d'une pièce à main à usage chirurgical ou dentaire obéissant à la norme ISO 3964-1982.

Désignée dans son ensemble par la référence numérique générale 4, cette partie femelle d'accouplement définit un logement cylindrique 6 destiné à recevoir le nez d'accouplement 2 du moteur électrique 1. La longueur L₂ comprise entre la face d'entrée 8 de la partie femelle d'accouplement 4 de la pièce à main contre laquelle le moteur électrique 1 vient buter et un épaulement circulaire 12 situé au fond du logement cylindrique 6 est égale à 32 mm. Ainsi, aux tolérances près, la longueur L₂ du logement cylindrique 6 est égale à la longueur hors-tout L₁ du nez d'accouplement 2 du moteur électrique 1.

La figure 3 est une vue de profil d'un moteur électrique pour pièce à main chirurgicale ou dentaire. Désigné dans son ensemble par la référence numérique générale 14, ce moteur comprend un nez d'accouplement 16 qui se raccorde sur le bâti du moteur 14 par un épaulement circulaire 18. La longueur L₃ du nez d'accouplement 16 est, à titre d'exemple non limitatif seulement, raccourcie d'environ 10 mm par rapport à la longueur du nez d'accouplement 2 d'un moteur 1 obéissant à la norme ISO 3964-1982. La longueur du nez d'accouplement raccourci 16 selon l'invention est donc d'environ 22 mm aux tolérances près.

Sur la partie proximale 20 du nez d'accouplement raccourci 16 on reconnaît un passage 22 pour l'air (le second passage pour l'eau n'est pas visible sur le dessin) ainsi qu'une bague 24 pour le blocage axial d'une pièce à main qui sera décrite en détail ci-dessous. Ces passages eau/air ainsi que la bague de blocage axial forment une interface du type commercialisée sous la marque déposée Intramatic® qui est encore considérée aujourd'hui comme une sorte de standard.

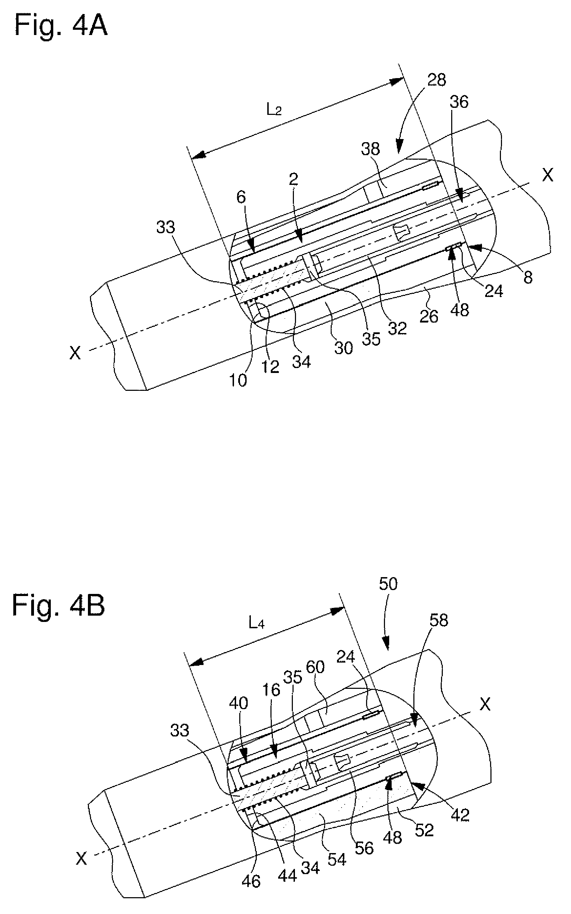

Les figures 4A et 4B sont des vues de profil avec arrachement de matière de la zone d'accouplement entre une pièce à main et un moteur électrique conformes à la norme ISO 3964-1982, respectivement entre une pièce à main et un moteur électrique raccourcis conformément à la présente invention.

Sur la figure 4A, on voit que l'enveloppe extérieure 26 de la pièce à main 28 renferme notamment une pièce-support 30 de forme générale cylindrique qui définit le logement cylindrique 6 pour la réception du nez d'accouplement 2 d'un moteur électrique 1 répondant à la norme ISO 3964-1982.

Une pièce entraînée 32 est centrée sur l'axe de symétrie longitudinale X-X de la pièce à main 28. Cette pièce entraînée 32 est couplée rigidement avec un arbre 33 via une goupille 35. Un ressort 34 enfilé sur l'arbre entraîné 33 autorise un certain débattement axial de la pièce entraînée 32 en cas de désalignement axial avec un arbre entraîneur 36 du moteur électrique 1. Cet arbre entraîneur 36 communique à la pièce entraînée 32 à l'extrémité de laquelle est monté un outil de travail tel qu'une fraise (non représentée) le couple moteur produit par le moteur électrique 1. Enfin, une fibre optique 38 assure l'acheminement de la lumière vers la zone de travail.

On retrouve sur la figure 4A la longueur L₂ du logement cylindrique 6 destiné à recevoir le nez d'accouplement 2 du moteur électrique 1. On rappelle que cette longueur est de 32 mm et correspond, aux tolérances près, à la longueur hors-tout L₁ du nez d'accouplement 2 du moteur électrique 1 obéissant à la norme ISO 3964-1982.

La figure 4B est une vue analogue à celle de la figure 4A illustrant l'accouplement entre un moteur à nez raccourci et une pièce à main selon l'invention. On note que les vues des figures 4A et 4B ont été exécutées avec une même échelle de réduction, ce qui permet d'apprécier instantanément le gain en longueur obtenu grâce à l'invention. En effet, en supposant à titre purement illustratif et non limitatif seulement, que l'on choisisse de réduire de 10 mm la longueur du nez d'accouplement d'un moteur électrique obéissant à la norme ISO 3964-1982, la longueur du nez d'accouplement raccourci 16 selon l'invention est d'environ 22 mm aux tolérances près. Par conséquent, la longueur L₄ du logement cylindrique 40 destiné à recevoir le nez d'accouplement raccourci 16 du moteur électrique 14 est d'environ 23 mm. Cette longueur L₄ est comprise entre la face d'entrée 42 du logement cylindrique 40 contre laquelle le moteur électrique 14 vient buter par son épaulement circulaire 18, et un épaulement circulaire 44 situé au fond du logement cylindrique 40. Un certain jeu de l'ordre de 1 mm est prévu entre la face avant 46 du nez d'accouplement 16 du moteur électrique 14 et l'épaulement circulaire 44 en fond de logement cylindrique 40 pour permettre à la bague de blocage axial 24 de venir s'encliqueter dans une rainure 48 prévue à l'arrière de la pièce à main 50.

Pour atteindre ce résultat, un certain nombre de composants de la pièce à main 50 selon l'invention doivent être raccourcis. Il s'agit de l'enveloppe extérieure 52, de la pièce-support 54 qui définit le logement cylindrique 40 pour la réception du nez d'accouplement raccourci 16 du moteur électrique 14 selon l'invention, et de la pièce entraînée 56 qui est couplée rigidement avec l'arbre 33 via la goupille 35 et qui est destinée à recevoir le couple moteur produit par le moteur électrique 14 via un arbre entraîneur 58. La fibre optique 60 est également raccourcie.

On comprend de ce qui précède que le raccourcissement du nez d'accouplement du moteur ne prête pas à modification de la partie proximale 20 du nez d'accouplement 16, de sorte que le blocage axial entre le moteur et une pièce à main de même que la géométrie des passages des fluides et du flux lumineux ne sont pas affectés. Il est donc possible de maintenir la compatibilité entre un moteur à nez raccourci et les pièces à main existantes du marché.

On comprend également que le raccourcissement du nez d'accouplement du moteur électrique s'accompagne d'un raccourcissement correspondant de la pièce à main. Selon l'invention, la longueur du nez d'accouplement est ramenée de 31,8 mm à une valeur comprise entre 17 et 25 mm et la longueur du logement cylindrique défini par la partie femelle d'accouplement de la pièce à main pour la réception du nez d'accouplement raccourci du moteur électrique est réduite dans les mêmes proportions que le nez d'accouplement.

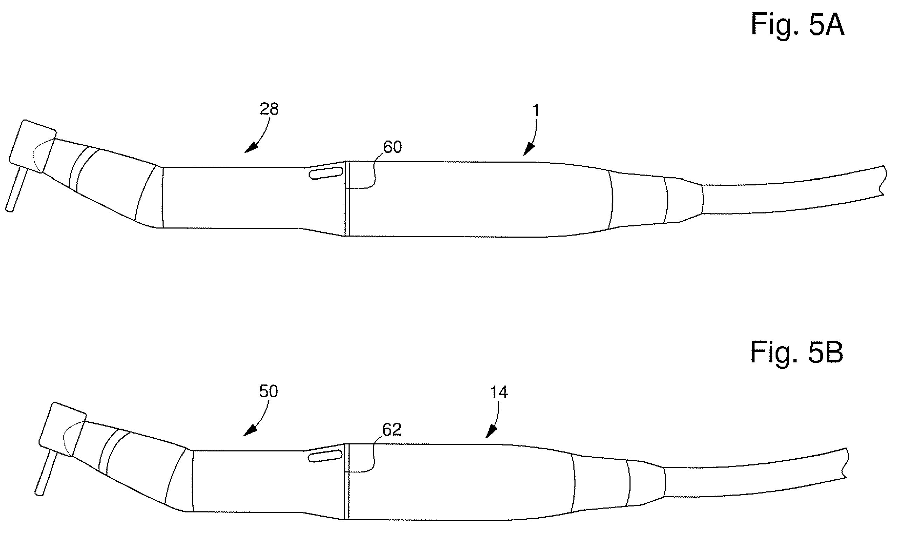

Les figures 5A et 5B, exécutées à la même échelle, permettent d'apprécier visuellement la diminution de longueur obtenue grâce à la présente invention.

La figure 5A est une vue de profil d'un ensemble formé par un moteur électrique 1 et une pièce à main 28 obéissant tous deux à la norme ISO 3964-1982.

La figure 5B est une vue de profil d'un ensemble formé par un moteur électrique 14 dont le nez d'accouplement (non visible au dessin) est raccourci et par une pièce à main 50 dont la longueur est réduite dans les mêmes proportions que le nez d'accouplement raccourci du moteur électrique 14.

Le fait que sur les figures 5A et 5B les zones de jonction 62 et 64 entre le moteur électrique 1, respectivement 14, et la pièce à main28, respectivement 50, soient alignées permet d'apprécier immédiatement le gain en longueur obtenu grâce à l'invention.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées à la présente demande de brevet. La présente invention procure de nombreux avantages au rang desquels on peut notamment citer:
- un gain de poids dû au raccourcissement de l'accouplement, la longueur totale de l'ensemble moteur/pièce à main étant réduite tout en conservant les performances du guidage en termes de tenue mécanique, de fiabilité et de tolérances;
- un déplacement vers l'avant du centre de gravité de l'ensemble moteur/pièce à main qui améliore considérablement la tenue en main de l'instrument et permet un travail moins fatigant en raison d'une ergonomie optimisée;
- une prise en main plus compacte et une amélioration de l'équilibrage de l'ensemble moteur/pièce à main;
- une diminution du prix de fabrication et de la matière première nécessaire à la fabrication du moteur;
- une meilleure résistance aux chocs, notamment en cas de chute;
- l'assurance de la compatibilité des pièces à main existantes du cabinet dentaire avec les moteurs à nez raccourci selon l'invention. En effet, les instruments existants répondent dans leur immense majorité à la norme ISO 3964-1982 et se connectent parfaitement et sans perte de performances sur un moteur à nez court;
- une diminution des pertes de transmission de la lumière dans la fibre optique du contre-angle.

## Revendications

1. Ensemble formé par un moteur électrique (14) et une pièce à main (50) à usage chirurgical ou dentaire, ledit moteur électrique comprenant un nez (16) pour l'accouplement avec une pièce à main chirurgicale ou dentaire (50), dont le rapport entre la longueur (L₃) du nez d'accouplement (16) et le diamètre extérieur (d₂) du nez d'accouplement fixé par la norme ISO 3964-1982 est compris entre 1,8 et 2,5, de sorte que la longueur du nez d'accouplement est comprise entre 17 et 25 mm ; ladite pièce à main (50) chirurgicale ou dentaire comprenant une partie femelle arrière définissant un logement cylindrique (40) destiné à recevoir le nez d'accouplement (16) du moteur électrique (14), la longueur (L₄) du logement cylindrique (40) étant réduite dans les mêmes proportions que la longueur (L₃) du nez d'accouplement (16) du moteur (14), la longueur (L₄) du logement cylindrique (40) présentant un jeu de l'ordre d'un millimètre par rapport à la longueur (L₃) du nez d'accouplement (16) du moteur électrique (14).

2. Ensemble selon la revendication 1, **caractérisé en ce que** la longueur (L₄) du logement cylindrique (40) destiné à recevoir le nez d'accouplement (16) du moteur électrique (14) est comprise entre une face d'entrée (42) du logement cylindrique (40) et un épaulement circulaire (44) situé au fond du logement cylindrique (40), la face avant (46) du nez d'accouplement (16) du moteur électrique (14) présentant un jeu avec l'épaulement circulaire (44) en fond du logement cylindrique (40) pour permettre à une bague de blocage axial (24) de s'encliqueter dans une rainure (48) prévue à l'arrière de la pièce à main (50).

## Patentansprüche

1. Anordnung mit einem Elektromotor (14) und einem Handstück (50) zur chirurgischen oder zahnmedizinischen Anwendung, wobei der Elektromotor einen Zapfen (16) für die Kopplung mit einem chirurgischen oder zahnmedizinischen Handstück (50) umfasst, wobei das Verhältnis zwischen der Länge (L₃) des Kopplungszapfens (16) und dem Außendurchmesser (d₂) des Kopplungszapfens, der durch die Norm ISO 3964-1982 festgelegt ist, im Bereich von 1,8 bis 2,5 liegt, so dass die Länge des Kopplungszapfens im Bereich von 17 bis 25 mm liegt; wobei das chirurgische oder zahnmedizinische Handstück (50) einen hinteren Buchsenabschnitt umfasst, der einen zylindrischen Aufnahmesitz (40) definiert, der dazu bestimmt ist, den Kopplungszapfen (16) des Elektromotors (14) aufzunehmen, wobei die Länge (L₄) des zylindrischen Aufnahmesitzes (40) im selben Verhältnis wie die Länge (L₃) des Kopplungszapfens (16) des Motors (14) verringert ist, wobei die Länge (L₄) des zylindrischen Aufnahmesitzes (40) einen Spielraum in der Größenordnung eines Millimeters in Bezug auf die Länge (L₃) des Kopplungszapfens (16) des Elektromotors (14) aufweiset.

2. Anordnung nach Anspruch 1, **dadurch gekennzeichnet, dass** die Länge (L₄) des zylindrischen Aufnahmesitzes (40), der dazu bestimmt ist, den Kopplungszapfen (16) des Elektromotors (14) aufzunehmen, sich zwischen einer Eintrittsfläche (42) des zylindrischen Aufnahmesitzes (40) und einer Ringwand (44), die am Ende des zylindrischen Aufnahmesitzes (40) angeordnet ist, erstreckt, wobei die vordere Fläche (46) des Kopplungszapfens (16) des Elektromotors (14) ein Spiel mit der Ringwand (44) am Ende des zylindrischen Aufnahmesitzes (40) besitzt, um einem axialen Blockierring (24) zu ermöglichen, in eine Aussparung (48), die im hinteren Bereich des Handstücks (50) vorgesehen ist, einzurasten.

## Claims

1. Assembly formed by an electric motor (14) and a handpiece (50) for surgical or dental use, wherein the electric motor comprises a nozzle (16) for coupling to a surgical or dental handpiece (50), wherein the ratio between the length (L₃) of the coupling nozzle (16) and the external diameter (d₂) of the coupling nozzle set by ISO standard 3964-1982 is comprised between 1.8 and 2.5, so that the length of the coupling nozzle is comprised between 17 and 25 mm, the chirurgical or dental handpiece (50) including a female rear portion defining a cylindrical housing (40) for receiving the coupling nozzle (16) of the electric motor (14), the length (L₄) of the cylindrical housing (40) being reduced in the same proportions as the length (L₃) of the coupling nozzle (16) of the motor (14), the length (L₄) of the cylindrical housing (40) having a play of around 1 mm relative to the length (L₃) of the coupling nozzle (16) of the electric motor (14).

2. Assembly according to claim 1, **characterized in that** the length (L₄) of the cylindrical housing (40) for receiving the coupling nozzle (16) of the electric motor (14) is comprised between an entry face (42) of the cylindrical housing (40) and a circular shoulder (44) located on the bottom of the cylindrical housing (40), the front face (46) of the coupling nozzle (16) of the electric motor (14) exhibiting play with the circular shoulder (44) at the bottom of the cylindrical housing (40) to allow an axial locking ring (24) to snap into a groove (48) provided at the rear of the handpiece (50).
